# EUROPÄISCHE PATENTANMELDUNG

(11) **EP 1 998 488 A1**
(43) Veröffentlichungstag der Anmeldung: **03.12.2008**
(21) Anmeldenummer: 07010549.9
(22) Anmeldetag: 26.05.2007
(51) Int. Cl.: H04L 9/06

(54) **Personalisierte AES Verschlüsselung**

(71) Anmelder: DSI Informationstechnik GmbH, 28199 Bremen (DE)
(72) Erfinder: Hinsenkamp, Laszlo, Dr., 28199 Bremen (DE); Michalik, Harald, Dr., 38640 Goslar (DE)

(57) **Zusammenfassung**

An der vorgeschlagenen Verschlüsselung ist neu, dass der AES durch Runden-Schlüsselerzeugung für eine Anwendergruppe personalisiert ist und dabei die bekannte Struktur des AES Verschlüsselungsrunden beibehalten wird

## Beschreibung

Es ist bekannt, dass das National Institute of Standards and Technology (NIST), nach einem weltweiten Wettbewerb um 2001 ein symmetrisches Verschlüsselungsverfahren mit dem Namen Advanced Encryption Standard (AES) als Norm (FIPS 197) ausgewählt hat. AES wurde für weltweite Anwendungen auf den Gebieten Bankensektor, Industrie, Ökonomie usw. gedacht. Die Struktur des AES ist bekannt und in der Literatur ausführlich analysiert. AES erfüllt vielseitige Anforderungen und ist auf unterschiedlichen technischen Plattformen effektiv realisierbar. AES leistet eine ansehbare Sicherheit. Es sind zahlreiche Formen der AES Realisierung veröffentlicht worden.

Die allgemeine Form der AES birgt bestimmte kryptographische Gefahren. Einerseits ist es für viele Anwendungen notwendig, unterschiedliche Anwendungsgruppen voneinander algorithmisch sicher zu trennen. Andererseits jedoch ist es nützlich, die vielen Vorteile des AES möglichst aufrecht zu erhalten.

Als Lösung für spezielle Zwecke ist eine Variante des AES sehr vorteilhaft. Diese Variante beinhaltet nur geringe Veränderungen zum AES, z.B. wird nur die Runden-Schlüsselerzeugung abgeändert.

Die Personalisierung durch veränderte Schlüsselgeneratoren könnte auf unterschiedlichen Wegen ausgeführt werden. Für alle Realisierungsformen gilt, dass der Personalisierungsschlüssel Bestandteil des Algorithmus ist und nicht gewechselt wird.

### Realisierungsbeispiele

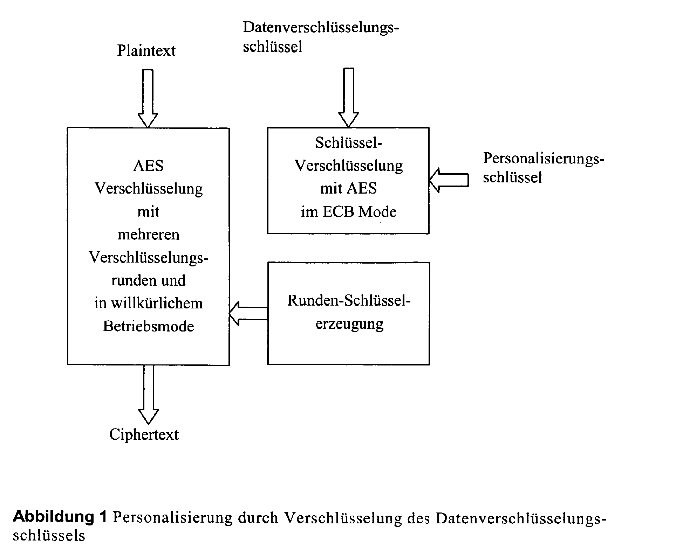

Eine der Möglichkeiten ist es, vor der AES Runden-Schlüsselgeneration den Datenverschlüsselungsschlüssel auch mit einem AES im ECB Mode zu verschlüsseln und den Runden-Schlüsselgenerator unverändert zu lassen (siehe Abbildung 1). In diesem Fall ist der Personalisierungsschlüssel derjenige Schlüssel, der dieser Schlüsselverschlüsselung zugeordnet ist. Die Länge sowohl des Datenverschlüsselungsschlüssels als auch des Personalisierungsschlüssels ist frei zu wählen.

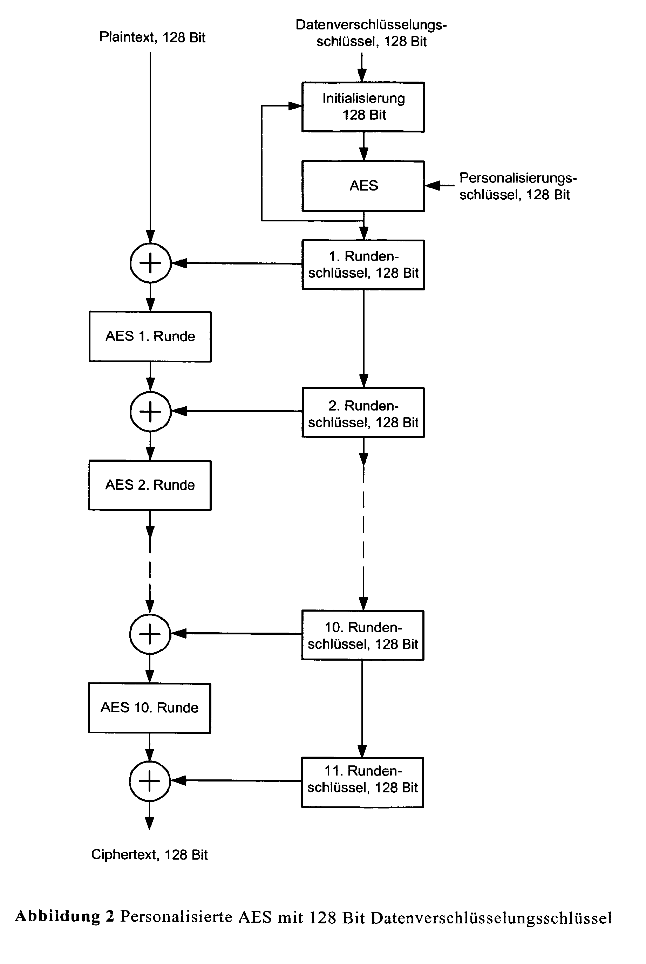

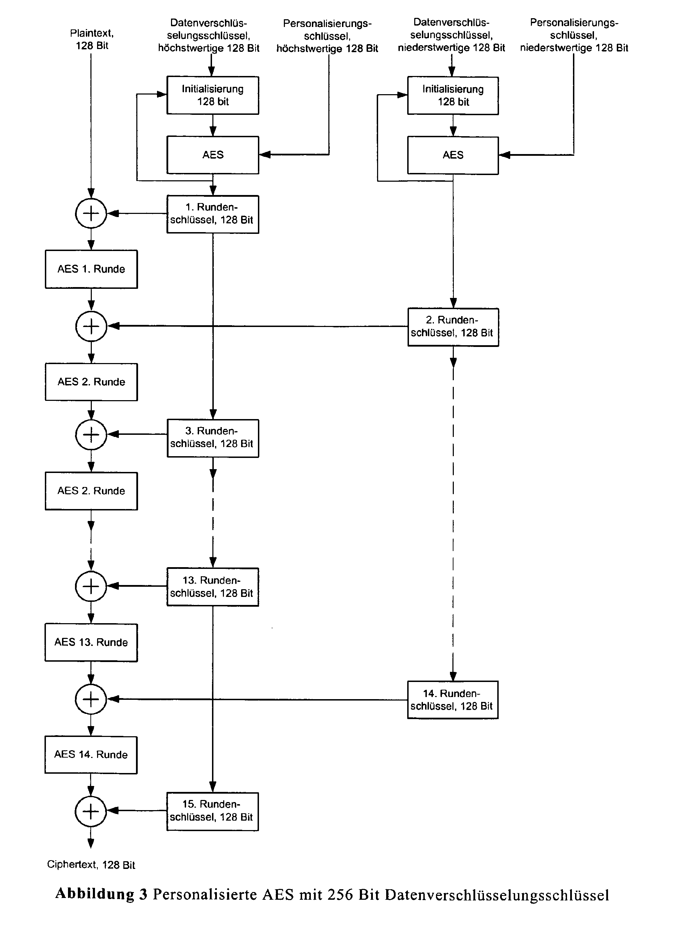

Eine andere Möglichkeit der Personalisierung zeigt die Abbildung 2 und die Abbildung 3 . In diesem Fall ist die Länge der Datenverschlüsselungsschlüssel 128 oder 256 Bit, die Länge der Personalisierungsschlüssel 128 Bit. Die Schlüsselverschlüsselung ist mit AES in OFB Mode durchgeführt.

Es sind viele andere Möglichkeiten denkbar, die Runden-Schlüsselgeneration mit einem Personalisierungs-Schlüssel für unterschiedliche Anwendergruppen zu personalisieren.

## Patentansprüche

1. Veränderte AES Verschlüsselung, die **dadurch gekennzeichnet ist, dass** das genormte Verfahren nach FIPS 197 nur bei der Runden-Schlüsselerzeugung verändert wird und die bekannte Struktur der AES Verschlüsselungsrunden unverändert bleibt.

2. Runden-Schlüsselerzeugung zur AES, die nach Anspruch 1 **dadurch gekennzeichnet ist, dass** die Schlüsselerzeugung durch einen speziellen Personalisierungsschlüssel für jede Anwendergruppe personalisiert ist.
